# EUROPÄISCHE PATENTANMELDUNG

(11) **EP 2 876 281 A1**
(43) Veröffentlichungstag der Anmeldung: **27.05.2015**
(21) Anmeldenummer: 14194380.3
(22) Anmeldetag: 21.11.2014
(51) Int. Cl.: F02C 3/13, F02C 3/34, F02C 6/00, F02C 6/18, F02C 7/08

(54) **Mikrogasturbinenanordnung**

(30) Priorität: 21.11.2013 DE 102013112893
(71) Anmelder: Deutsches Zentrum für Luft- und Raumfahrt e.V., 51147 Köln (DE)
(72) Erfinder: Henke, Martin, 70174 Stuttgart (DE); Huber, Andreas, 70374 Stuttgart (DE)
(74) Vertreter: Albrecht, Ralf

(57) **Zusammenfassung**

Die vorliegende Erfindung betrifft eine Mikrogasturbinenanordnung mit
- einer Brennkammer (3),
- einer Turbine (4),
- einem Rekuperator (2), welcher der Brennkammer (3) vorgeschaltet mit seiner kalten Seite in einer Verbrennungsluftleitung (7) positioniert ist, um angesaugte Verbrennungsluft vor ihrem Eintritt in die Brennkammer (3) vorzuwärmen, wobei die warme Seite des Rekuperators (2) mit der Turbine (4) über eine Abgasseite (9) verbunden ist, um dem Rekuperator (2) heiße Abgase zuzuführen,
- einem Verdichter (1), um Verbrennungsluft anzusaugen und durch die Mikrogasturbinenanordnung zu fördern, und
- einem Generator (5) zur Stromerzeugung,

wobei der Verdichter (1) und der Generator (5) auf einer gemeinsamen Turbinenwelle (4a) der Turbine (4) sitzen und über diese angetrieben werden,
wobei die Abgasleitung (9) eine parallel zu dem Rekuperator (2) geschaltete und diese umgehende Rekuperator-Bypassleitung (13, 19) aufweist und Ventilmittel (14, 17) in der Abgasleitung (9) vorgesehen sind, um den Abgasstrom durch den Rekuperator (2, 15) einerseits und/oder die parallel dazu geschaltete Rekuperator-Bypassleitung (13, 19) andererseits zu steuern, **dadurch gekennzeichnet,** dass in der Rekuperator-Bypassleitung (13, 19) wenigstens ein Wärmetauscher (12, 18) angeordnet ist, um Wärme aus der Mikrogasturbinenanordnung auszukoppeln.

## Beschreibung

Die vorliegende Erfindung betrifft eine Mikrogasturbinenanordnung mit
- einer Brennkammer, die einlassseitig an eine Verbrennungsluftzuführleitung angeschlossen ist und in welcher Brennstoff mit zugeführter Verbrennungsluft verbrannt wird,
- einer Turbine, die mit der Auslassseite der Brennkammer über eine Rauchgasleitung verbunden ist und durch die heißen Abgase aus der Brennkammer angetrieben wird,
- einem Rekuperator, welcher der Brennkammer vorgeschaltet mit seiner kalten Seite in der Verbrennungsluftleitung positioniert ist, um angesaugte Verbrennungsluft vor ihrem Eintritt in die Brennkammer vorzuwärmen, wobei die warme Seite des Rekuperators mit der Turbine über eine Abgasseite verbunden ist, um dem Rekuperator heiße Abgase zuzuführen,
- einem Verdichter, um Verbrennungsluft anzusaugen und durch die Mikrogasturbinenanordnung zu fördern, und
- einem Generator zur Stromerzeugung,
wobei der Verdichter und der Generator auf einer gemeinsamen Turbinenwelle der Turbine sitzen und über diese angetrieben werden und wobei die Abgasleitung eine parallel zu dem Rekuperator geschaltete und diese umgehende Rekuperator-Bypassleitung aufweist und Ventilmittel in der Abgasleitung vorgesehen sind, um den Abgasstrom durch den Rekuperator einerseits und/oder die parallel dazu geschaltete Rekuperator-Bypassleitung andererseits zu steuern.

Dabei kann der Verdichter dem Rekuperator vorgeschaltet in der Verbrennungsluftzuführleitung angeordnet sein (siehe Oberbegriff von Anspruch 1), um Verbrennungsluft anzusaugen, zu verdichten und dann durch die weiteren Komponenten der Mikrogasturbine zu fördern. Alternativ kann der Verdichter auch hinter der Turbine platziert sein (siehe Anspruch 2).

Auf dem Weg zu einer emissionsarmen Energieversorgung werden die fossilen Energieträger Kohle, Öl und Erdgas noch einen wesentlichen Beitrag leisten müssen. Da diese Energieträger nur noch begrenzt zur Verfügung stehen und ihre Verbrennung außerdem zur Emission von Treibhausgasen führt, gilt es, diese Ressourcen sparsam und umweltfreundlich zu verwenden.

Die sogenannte Kraft-Wärme-Kopplung (KWK) soll hierbei einen wesentlichen Beitrag leisten. Bei dieser Technologie werden Strom und Wärme nicht örtlich getrennt in verschiedenen Anlagen, sondern als Koppelprodukte gemeinsam in einer Anlage erzeugt. Hierdurch können hohe Nutzungsgrade erzielt werden, so dass die auftretenden Energieverluste gering sind. Gleichzeitig werden umweltschädliche Emissionen auf einem niedrigen Niveau gehalten. Schließlich werden durch die dezentrale Stromerzeugung die elektrischen Versorgungsnetze entlastet.

Die Anwendung der Kraft-Wärme-Kopplung in zentralen Heizkraftwerken ist derzeit Ballungsgebieten vorbehalten, da die Leitung von Wärme über größere Distanzen zum einen sehr aufwendig, und zum anderen mit hohen Verlusten behaftet ist. Insofern wird die Technologie der Kraft-Wärme-Kopplung in erster Linie in kleinen und mittelgroßen Blockheizkraftwerken (BHKW) eingesetzt, die ohne aufwendige Wärmeverteilungsnetze auskommen und derzeit hohe Gesamtwirkungsgrade im Bereich von 90% erreichen. Primäre Einsatzgebiete sind hierbei große Wohngebäude, Krankenhäuser sowie Industrie- und Gewerbebetriebe. Zusätzlich ist geplant, dezentrale BHKW-Anlagen als sogenannte virtuelle Kraftwerke einzusetzen, die Kapazitätsschwankungen in den Stromnetzen bei wachsenden Stromanteilen aus erneuerbaren Energien ausgleichen sollen.

Die Hauptkomponenten eines Blockheizkraftwerkes sind ein Antriebsaggregat, ein Generator zur Stromerzeugung und ein Wärmeübertrager zur Wärmeauskopplung. Darüber hinaus umfasst die Ausrüstung eines Blockheizkraftwerkes in der Regel Steuerungs- und Regelungseinrichtungen, Komponenten zur Minderung von Schadstoffemissionen wie beispielsweise Drei-Wege-Katalysatoren zur Stickoxidreduzierung und CO-Oxidation, eine Abgasanlage, Schallschutzeinrichtungen etc. Als Antriebsaggregate kommen in den meisten Fällen Verbrennungsmotoren zum Einsatz. In jüngerer Zeit werden auch in zunehmendem Maße Gasturbinen und hier insbesondere kompakte Gasturbinen mit einer Leistung bis herunter zu 30kWₑₗ, die auch Mikrogasturbinen genannt werden, zum Einsatz. Bei Einsatz einer Mikrogasturbine als Antriebsaggregat ist üblicherweise ein Rekuperator zur Erhöhung des elektrischen Wirkungsgrades der Mikrogasturbinenordnung vorgesehen. Derartige Mikrogasturbinen arbeiten nach dem Joule-Prozess und umfassen einen Verdichter (Kompressor), der aus der Umgebung Luft ansaugt und sie verdichtet. Die verdichtete Luft tritt in einem Rekuperator ein, in dem sie durch heiße Abgase vorgewärmt wird. In der Brennkammer wird die verdichtete und vorgewärmte Luft mit eingedüstem Brennstoff unter nahezu konstantem Druck verbrannt. Die bei der Verbrennung entstehenden Verbrennungsgase werden in einer Turbine entspannt, wodurch die Turbinenwelle mit ihren Komponenten angetrieben wird. Dabei wird ein Teil der in den Verbrennungsgasen enthaltenen Enthalpie in mechanische Energie umgewandelt. Ein Großteil dieser mechanischen Energie (bis zu etwa 70%) wird zum Antrieb des Verdichters genutzt, welcher auf der Welle der Turbine sitzt, der verbleibende Teil steht als nutzbare elektrische Energie Wₑₗ zur Verfügung, die durch Umwandlung von mechanischer Energie im Generator erzeugt wird, der ebenfalls von der Turbine angetrieben wird. Die noch heißen Abgase wärmen im Rekuperator die Verbrennungsluft vor und verlassen danach die Mikrogasturbine. Die verbleibende thermische Energie des Abgases wird daraufhin je nach Anwendungsgebiet verwertet. Dabei kann die Abgasleitung einen den Rekuperator umgehende und parallel zu diesem geschaltete Rekuperator-Bypassleitung aufweisen, durch welche bei Bedarf die heißen Abgase an dem Rekuperator vorbeigeführt werden können (US 5,193,337 A).

Alternativ zu den vorbeschriebenen Hochdruck-Mikrogasturbinen, bei denen der Verdichter die angesaugte Luft durch die Mikrogasturbine drückt, sind auch Mikrogasturbinen bekannt, die im subatmosphärischen Bereich betrieben werden (inverse Mikrogasturbinen) und nach dem sogenannten Inverted Brayton Cycle arbeiten. Bei diesen im subatmosphärischen Bereich arbeitenden Mikrogasturbinen ist der Verdichter in der Abgasleitung stromabwärts von der Turbine und insbesondere von dem Rekuperator angeordnet und zieht oder saugt die Verbrennungsluft durch die Brennkammer und die Turbine.

BHKW-Anlagen bzw. Mikrogasturbinen werden im Allgemeinen für lange Laufzeiten mit Volllast konzipiert, um wirtschaftlich betrieben werden zu können. Daher ist eine Anpassung an den Strom- und Wärmebedarf der angeschlossenen Verbraucher erforderlich. Da das BHKW Strom und Wärme stets als Koppelprodukte in einem nahezu festen Verhältnis zueinander liefern, muss der Strom- oder der Wärmebedarf der Verbraucher als Führungsgröße für die Auslegung und den Betrieb des BHKW ausgewählt werden. Der erzeugte Strom wird üblicherweise von den an das BHKW angeschlossenen Verbrauchern selbst genutzt, überschüssige Energie kann in das öffentliche Netz eingespeist werden. Die in dem BHKW erzeugte Wärme kann jedoch bei zurückgehendem Wärmebedarf der angeschlossenen Verbraucher nicht oder nur in begrenztem Umfang, zum Beispiel in einem Wärmespeicher, zwischengespeichert werden.

Daher wird in den meisten Fällen der Wärmebedarf der Verbraucher als Führungsgröße für den Betrieb eines BHKW gewählt. Bei dieser wärmegeführten Betriebsweise bestimmt die Wärmenachfrage die Laststufe des BHKW.

Mikrogasturbinen zeichnen sich im Teillastbetrieb aufgrund der drehzahlgesteuerten Fahrweise durch einen deutlich verringerten elektrischen Wirkungsgrad und erhöhte CO-Emissionen aus. Der verringerte Wirkungsgrad im Teillastbetrieb ist auf das reduzierte Druckverhältnis, welches durch die im Verhältnis zum Volllastbetrieb geringere Drehzahl und den reduzierten Massenstrom bedingt ist, und der damit verbundenen geringeren Turbineneintrittstemperatur bei konstant erhaltener Turbinenaustrittstemperatur zurückzuführen. Ferner muss das mögliche Luft-Brennstoff-Verhältnis zwischen Volllastbetrieb und Teillastbetrieb abgestimmt werden. In der Regel wird die Teillast durch die magere Löschgrenze und die aufgrund der geringeren Flammentemperatur erhöhten CO-Emissionen begrenzt. Zwischen Teillast und Volllast erhöht sich aufgrund des steigenden Druckverhältnisses der Brennstoffmassenstrom stärker als der Luftmassenstrom, was zu einem niedrigeren Luft-Brennstoff-Verhältnis führt. Dies kann zu erhöhten NOx-Emissionen aufgrund der erhöhten Flammentemperatur führen. Ein weiteres Problem bei derzeitigen Mikrogasturbinen stellt die hohe Materialbeanspruchung und die damit verbundene geringere Lebensdauer der Heißgasbauteile aufgrund des Teillastbetriebes und der damit verbundenen Laständerungen/Laständerungsgeschwindigkeiten dar.

Wegen dieser mit dem Teillastbetrieb verbundenen Probleme und der Forderung nach hohen Betriebsstunden sowie einer hohen Effizienz werden Blockheizkraftwerke/Mikrogasturbinen vorwiegend im Volllastbetrieb betrieben, so dass die abgegebene Wärmemenge relativ konstant ist und kaum variiert werden kann. Um den gesamten Wärmebedarf über das Jahr abzudecken, können BHKW nur mit Hilfe eines Spitzenlastkessels und eines Wärmespeichers betrieben werden, um die in Spitzenzeiten benötigte Wärmeenergie zur Verfügung stellen zu können. Im Rahmen der Energiewende und dem Ausbau der erneuerbaren Energien werden in Zukunft jedoch hochflexible Kraftwerke, die eine flexible Wärmeauskopplung ermöglichen und auch eine entscheidende Rolle zur Sicherstellung des Strombedarfs und zur Stabilisierung des Netzes spielen.

Ferner ist aufgrund des geringen Wasseranteils im Abgas der Mikrogasturbinenanordnung als Folge des hohen Luftüberschusses eine Brennwertnutzung, wie sie im Bereich der modernen Heizungsbrenner mit einem geringen Luftüberschuss üblich ist, nicht möglich.

Aufgabe der vorliegenden Erfindung ist es daher, eine Mikrogasturbine und ein BHKW auf Mikrogasturbinenbasis der eingangs genannten Art so auszugestalten, dass eine flexible Wärmeauskopplung möglich ist.

Diese Aufgabe ist erfindungsgemäß bei einer Mikrogasturbinenanordnung der eingangs genannten Art durch die kennzeichnenden Merkmale der Ansprüche 1 und 2 gelöst. Erfindungsgemäß weist die Abgasleitung eine parallel zu dem Rekuperator geschaltete und diesen umgehende Rekuperator-Bypassleitung auf, in welcher wenigstens ein Wärmetauscher angeordnet ist, um Wärme aus der Mikrogasturbinenanordnung auszukoppeln. Damit erfolgt eine Flexibilisierung der Wärmeauskopplung mit Hilfe eines zum Rekuperator parallel geschalteten Abwärmenutzungskonzepts (Wärmetauschers), wobei die Ventilmittel eine stufenlose Verteilung der Wärme des Abgases zwischen dem Rekuperator und dem Wärmetauscher nach dem Turbinenauslass ermöglichen. Im Ergebnis ist eine stufenlose Wärmeauskopplung möglich. Es hat sich gezeigt, dass über den parallel geschalteten Wärmetauscher die auskoppelbare Heizenergie von Blockheizkraftwerken je nach Größe des Systems um das zwei- bis vierfache gesteigert werden kann, so dass in der Regel die maximal benötigte Heizenergie im Winter ohne weiteren Spitzenlastkessel bereitgestellt werden kann. Hiermit sind, je nach Anlagengrößen, vom Teillastbetrieb (50% Massenstrom) mit Abwärmenutzung und über den Rekuperator bis zum Volllastbetrieb mit Abwärmenutzung und über den parallelen Wärmetauscher Modulationen bzw. Leistungsvariationen von 1:5 bis 1:8 möglich. Ähnliches gilt für Abwärmenutzungskonzepte zur Bereitstellung von Prozessdampf und zur Erhitzung von Thermoöl. Ein weiterer Vorteil der flexiblen Wärmeauskopplung besteht in der Reduktion der Taktung (Anzahl der Starts und Stopps) der Anlage und damit in der Erhöhung der Lebensdauer, da diese die Wärme benutzergerecht zur Verfügung stellen kann.

Vorzugsweise sind entsprechende Ventilmittel (Steuerventile, Regelventile), welche den Abgasstrom durch den Rekuperator und den Wärmetauscher steuern, stromabwärts von dem Rekuperator/Wärmetauscher vorgesehen, d.h. an einer Stelle, wo die Abgase bereits abgekühlt sind. Auf diese Weise werden die Ventile thermisch nicht stark belastet. Beispielsweise kann ein entsprechendes Ventil an der Stelle vorgesehen sein, wo der Leitungsabschnitt der Abgasleitung, in welcher der Rekuperator positioniert ist, und die parallel dazu verlaufende Rekuperator-Bypassleitung, in welcher der Wärmetauscher vorgesehen ist, zusammengeführt werden.

In weiterer Ausgestaltung der Erfindung ist vorgesehen, dass in der Abgasleitung seriell zu dem Rekuperator wenigstens ein weiterer Rekuperator vorgesehen ist, wobei die Rekuperatoren auf der kalten Seite nacheinander von der verdichteten Verbrennungsluft und auf der heißen Seite von den heißen Abgasen durchströmt werden. Bei dieser Ausführungsform bildet dann der in Strömungsrichtung des Abgases erste Rekuperator einen Hochtemperatur-Rekuperator und der dahinterliegende Rekuperator einen Niedertemperatur-Rekuperator. Auf diese Weise kann insbesondere beim Niedertemperatur-Rekuperator auf kostenintensive Werkstoffe verzichtet werden.

Ebenso kann vorgesehen sein, dass die Abgasleitung eine parallel zu einem Rekuperator und diesen umgehende erste Rekuperator-Bypassleitung, in der wenigstens ein Wärmetauscher angeordnet ist, und eine parallel zu einem weiteren Rekuperator geschaltete und diesen umgehende zweite Rekuperator-Bypassleitung, in welcher wenigstens ein Wärmetauscher angeordnet ist, aufweist, um Wärme aus der Mikrogasturbinenanordnung auszukoppeln, wobei in der Abgasleitung Ventilmittel vorgesehen sind, um die Abgasströme durch die Rekuperatoren einerseits und/oder die jeweils parallel dazu geschalteten Wärmetauscher andererseits durch entsprechende zu steuern. Auch hier ist zweckmäßigerweise vorgesehen, dass die Ventilmittel zur Steuerung des Abgasstroms jeweils stromabwärts von den Rekuperatoren und den parallel dazu geschalteten Wärmetauschern angeordnet sind. Insbesondere können Sie jeweils an der Stelle positioniert sein, wo die Leitungsabschnitte der Abgasleitung, in denen die Rekuperatoren angeordnet sind, und die Rekuperator-Bypassleitungen, in denen die Wärmetauscher angeordnet sind, zusammengeführt werden.

Im Normalbetrieb sind die Ventilmittel zur Steuerung des Abgasstroms so eingestellt, dass der gesamte Abgasmassenstrom über den Rekuperator geführt wird. Wird nun mehr Wärme, zum Beispiel zur Warmwasser- oder Dampferzeugung benötigt als die Wärmeauskopplung über die ansonsten vorhandene Wärmetauscher liefern kann, werden die Ventilmittel so eingestellt, dass der benötigte Abgasmassenstrom über den parallel zum Rekuperator geschalteten weiteren Wärmetauscher geleitet wird. Im Extremfall wird der gesamte Massenstrom über den Wärmetauscher geleitet, um zusätzliche Wärme auszukoppeln. Hierbei ist zu beachten, dass der Verbrennungsluftmassenstrom jederzeit über den Rekuperator geführt wird und dabei die Verbrennungsluft weniger vorgewärmt wird, wenn der Abgasmassenstrom nicht vollständig über den Rekuperator geführt wird. Die flexible Wärmeauskopplung hat dementsprechend zur Folge, dass bei (vollständiger) Beaufschlagung des Wärmetauschers der Brennstoffmassenstrom in der Brennkammer gesteigert werden muss, was durch eine mehrstufige Brennkammer erreicht werden kann, in der dann die einzelnen Stufen nach Bedarf zugeschaltet werden.

Gemäß einer Ausführungsform der Erfindung kann auch vorgesehen sein, dass in der Verbrennungsluftleitung eine den Rekuperator/die Rekuperatoren umgehende Bypassleitung vorgesehen ist, und dass Ventilmittel vorgesehen sind, um den Abgasstrom durch den Rekuperator/die Rekuperatoren und/oder die parallele Bypassleitung insbesondere in der Weise zu steuern, dass die Massenströme der durch den Rekuperator/die Rekuperatoren strömenden Verbrennungsluft und der durch den Rekuperator/die Rekuperatoren strömenden Abgase gleich ist. Durch diese Ausgestaltung wird die Möglichkeit eröffnet, die angesaugte Verbrennungsluft teilweise an dem Rekuperator vorbeizuführen. Durch die Umgehung des Rekuperators auf der Druckseite können Druckverluste verringert werden, was den elektrischen Wirkungsgrad erhöht.

In vorteilhafter Weise sind die Einstellungen so gewählt, dass der heiße Abgasmassenstrom und der kalte Verbrennungsluftmassenstrom durch den Rekuperator etwa gleich sind. Wenn demgemäß wie zuvor beschrieben ein Teil des Abgasmassenstromes an dem Rekuperator vorbei durch den in der Rekuperator-Bypassleitung vorgesehenen Wärmetauscher geführt wird, sollte auch ein entsprechender Teil des Verbrennungsluftmassenstroms an dem Rekuperator vorbeigeführt werden. Wenn in umgekehrter Weise Verbrennungsluft an dem Rekuperator vorbeigeführt wird, um Druckverluste zu minimieren, sollte entsprechend auch ein Teil der heißen Abgase an dem Rekuperator vorbei geführt werden. Die Steuerung der Abgasmassenströme kann durch entsprechende Steuer- bzw. Regeleinrichtungen, welche die Ventile betätigen, realisiert werden.

Wenn mehrere Wärmetauscher vorgesehen sind, können die kalten Seiten von mehreren, insbesondere von allen Wärmetauschern miteinander verbunden sein, so dass ein zu erwärmendes Fluid nacheinander in den Wärmetauschern erwärmt wird. Alternativ können einzelne Wärmetauscher auch individuell, d.h. separat voneinander zur Wärmeauskupplung eingesetzt werden.

Ferner kann die Abgasleitung mit einer zum Verdichter führenden Verbrennungsluftzuführleitung verbunden sein, um der Verbrennungsluft Abgase zuzumischen. Dadurch, dass ein Teil des Abgases der Mikrogasturbine der Frischluft vor dem Verdichter zugeführt und mit dieser vermischt wird, kann der Wassergehalt im Abgas, je nach Rückführungsrate, entsprechend so erhöht werden, dass - bei entsprechender Rücklauftemperatur des in den Wärmetauschern erwärmten Mediums - der im Abgas enthaltene Wasserdampf auskondensiert und die dabei entstehenden sogenannte Kondensationswärme ausgekoppelt werden. Als Folge verbessert sich der thermische Wirkungsgrad der Anlage. Zudem reduziert das zugeführte Abgas die Flammentemperatur in der Brennkammer, wobei insbesondere die NOₓ-Emissionen reduziert werden können. In der Rückführungsleitung kann ein Wärmeübertrager vorgesehen sein, um einen möglichst hohen elektrischen Wirkungsgrad zu erzielen.

Die erfindungsgemäß vorgesehen flexible Wärmeauskopplung ist sowohl bei Hochdruck-Mikrogasturbinen, als auch bei Mikrogasturbinen, die im subatmosphärischen Bereich arbeiten, einsetzbar. Entsprechend kann der Verdichter dem Rekuperator vorgeschaltet in der Verbrennungsluftzuführleitung angeordnet sein, um Verbrennungsluft anzusaugen, zu verdichten und durch die weiteren Komponenten der Mikrogasturbinen zu drücken. Alternativ kann der Verdichter der Turbine nachgeschaltet in der Abgasleitung vorgesehen und ausgebildet sein, um Verbrennungsluft durch die Verbrennungsluftzuführleitung anzusaugen und anschließend saugend durch die Brennkammer und die Turbine zu transportieren.

Hinsichtlich weiterer vorteilhafter Ausgestaltungen der Erfindung wird auf die Unteransprüche sowie die nachfolgende Beschreibung von Ausführungsbeispielen unter Bezugnahme auf die beiliegende Zeichnung verwiesen. In der Zeichnung zeigt:
- Figur 1: ein Schaltbild einer herkömmlichen Hochdruck- Mikrogasturbinenanordnung,
- Figur 2: ein Schaltbild einer herkömmlichen, im subatmosphärischen Bereich arbeitenden Mikrogasturbinenanordnung;
- Figur 3: einen Ausschnitt einer erfindungsgemäßen flexiblen Wärmeauskopplung für eine Mikrogasturbinenanordnung,
- Figur 4: eine Variante der flexiblen Wärmeauskopplung aus Figur 3,
- Figur 5: ein Schaltbild eines Ausschnittes einer alternativen flexiblen Wärmeauskopplung für eine Mikrogasturbinenanordnung, und
- Figur 6: ein Schaltbild einer weiteren Variante für eine flexible Wärmeauskopplung für eine Mikrogasturbinenanordnung.

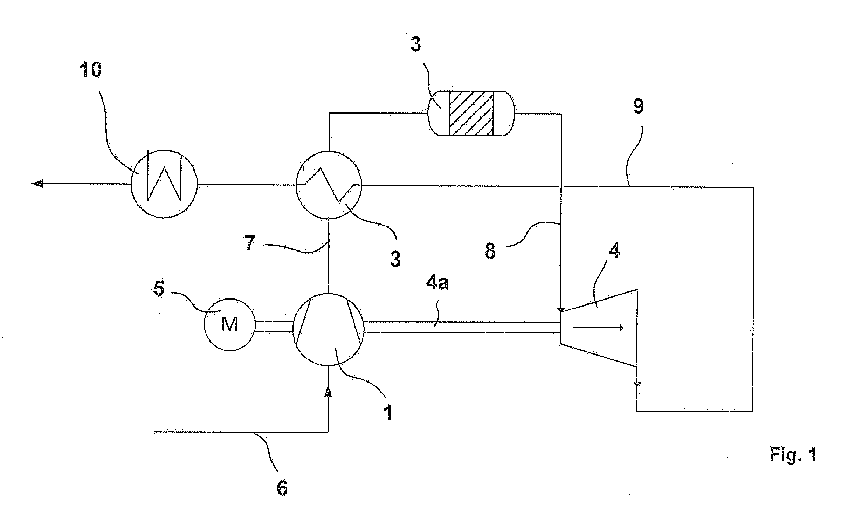

In der Figur 1 ist eine erste Ausführungsform einer herkömmlichen Mikrogasturbinenanordnung schematisch dargestellt. Diese umfasst einen Verdichter bzw. Kompressor 1, einen Rekuperator 2, eine Brennkammer 3 und eine Turbine 4, die in Reihe geschaltet sind, sowie einen an die Turbine 4 angeschlossenen Generator 5. In dem Verdichter 1 wird angesaugte Frisch- bzw. Verbrennungsluft, die dem Verdichter 1 über eine Verbrennungsluftzuführleitung 6 zugeführt wird, verdichtet. Die verdichtete Verbrennungsluft wird anschließend über eine Verbrennungsluftleitung 6 der kalten Seite des Rekuperators 2 zugeführt, um sie dort vorzuwärmen. Die vorgewärmte Verbrennungsluft wird dann der nachgeschalteten Brennkammer 3 zugeführt, in welcher Brennstoff mit der vorgewärmten Verbrennungsluft verbrannt wird. Die bei der Verbrennung entstehenden heißen Abgase werden der Turbine 4 zugeführt, welche mit der Auslassseite der Brennkammer 3 über eine Rauchgasleitung 8 verbunden ist und durch die heißen Abgase aus der Brennkammer 3 angetrieben wird. Die Turbine 4 treibt einerseits den Verdichter 1 und andererseits den Generator 5 an, die hierzu auf der Turbinenwelle 4a sitzen. Auslassseitig ist die Turbine 4 mit der heißen Seite des Rekuperators 2 über eine Abgasleitung 9 verbunden, um die entspannten, warmen Abgase dem Rekuperator 2 zuzuführen, wo sie zur Vorwärmung der Verbrennungsluft verwendet werden. Zusätzlich ist dem Rekuperator 2 nachgeschaltet ein Wärmetauscher 10 vorgesehen, um die Restwärme der Abgase nutzen zu können. Ebenso kann die Abgasleitung stromabwärts von dem Wärmtauscher 10 durch eine Rückführungsleitung über ein entsprechendes Mischventil mit der Verbrennungsluft-Zuführleitung 6 verbunden sein, um der vom Verdichter 1 angesaugten Verbrennungsluft Abgase zuzumischen. Die Mikrogasturbinenanordnung arbeitet nach dem Joule-Prozess, der allgemein bekannt ist und daher an dieser Stelle nicht näher erläutert werden soll.

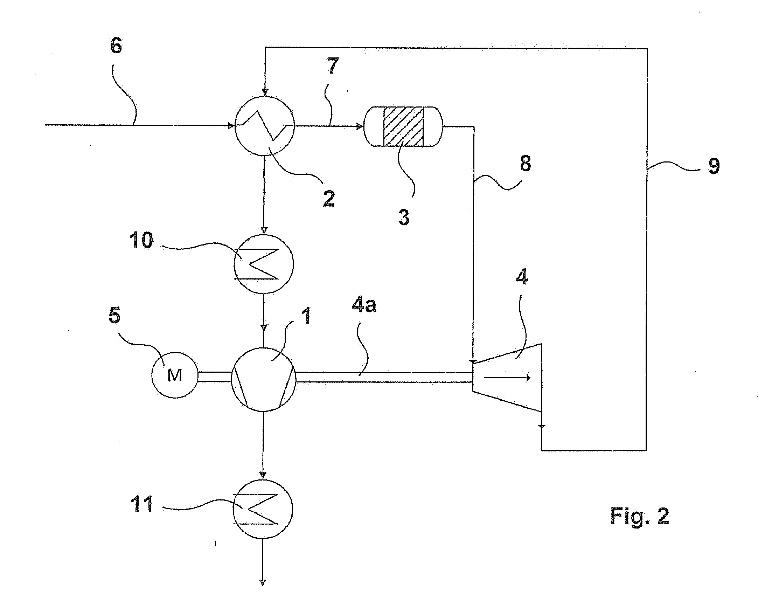

In der Figur 2 ist eine alternative Mikrogasturbinenanordnung dargestellt, die im subatmosphärischen Bereich arbeitet. Im Unterschied zu der Hochdruck-Mikrogasturbinenanordnung gemäß Figur 1, bei welcher der Verdichter Brennungsluft ansaugt und durch die Mikrogasturbinenanordnung drückt, ist hier der Verdichter 1 in der Abgasleitung 9 der Turbine 4 und dem Rekuperator 2 nachgeschaltet vorgesehen, so dass er die Verbrennungsluft ansaugt und auch saugend durch die Mikrogasturbinenanordnung transportiert. Des Weiteren sind Wärmetauscher 10, 11 in der Abgasleitung 9 einerseits zwischen dem Rekuperator 2 und dem Verdichter 1 und andererseits den Verdichter 1 nachgeschaltet vorsehen, um Wärme auskoppeln zu können. Der dem Verdichter 1 vorgeschaltete Wärmetauscher 10 kühlt dabei die vom Verdichter 1 zu komprimierende Luft. Damit wird die vom Verdichter 1 zu erbringende Arbeitsleistung verringert und der Wirkungsgrad der Gesamtanlage erhöht. Die Mikrogasturbinenanordnung arbeitet nach dem Inverted Brayton Cycle, der bekannt ist und daher im Einzelnen nicht näher erläutert werden soll.

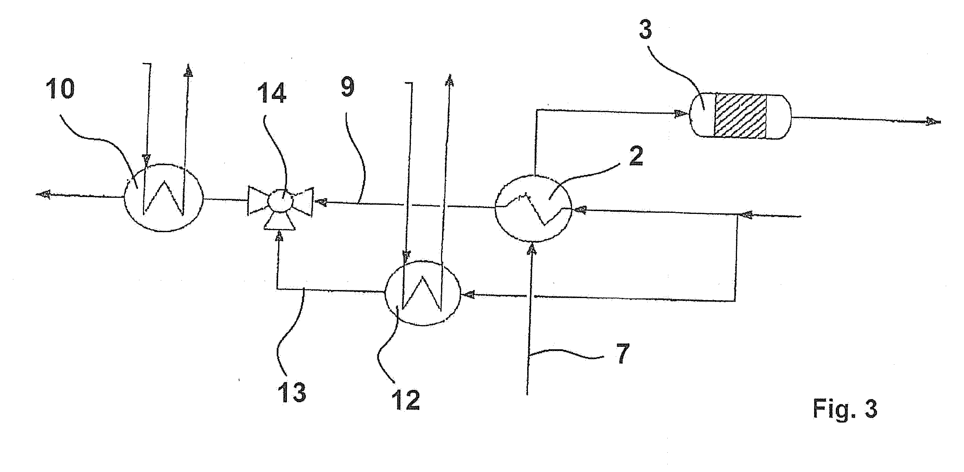

Die vorbeschriebenen Ausführungsformen von Mikrogasturbinen sind erfindungsgemäß mit einer flexiblen Wärmeauskopplung zusätzlich zu der bestehenden Gaswärmenutzung über den Wärmetauscher 10, welcher dem Rekuperator 2 nachgeschaltet ist, realisiert. Ein Beispiel für eine solche flexible Wärmeauskopplung ist in der Figur 3 dargestellt. Hier ist ein zusätzlicher Wärmetauscher 12 parallel zu dem Rekuperator 2 geschaltet in einer Rekuperator-Bypassleitung 13 angeordnet. Konkret verzweigt sich die Abgasleitung 9 in einen Leitungsabschnitt 9a, in dem der Rekuperator 2 angeordnet ist, und die Rekuperator-Bypassleitung 13. Die Wärmeauskopplung erfolgt über eine Aufteilung des Abgasmassenstroms vor dessen Eintritt in den Rekuperator 2 in einen Teilstrom, welcher durch den Rekuperator 2 bzw. den Leitungsabschnitt 9a geführt wird, und/oder in einen Teilstrom, welcher dem Wärmetauscher 12 zugeführt wird. Die Steuerung der Abgasmassenströme erfolgt über ein Ventil 15 auf der stromabwärtigen Seite des Rekuperators 2/des Wärmetauschers 12. In dem dargestellten Ausführungsbeispiel ist das Ventil 14 an der Stelle vorgesehen, wo der Leitungsabschnitt 9a der Abgasleitung 9, in welcher der Rekuperator 2 sitzt, und die Rekuperator-Bypassleitung 13 wieder zusammengeführt werden. Das Ventil 14 befindet sich damit auf der Seite von Rekuperator 2/Wärmetauscher 12, wo die Abgase bereits abgekühlt sind, so dass es thermisch wenig beansprucht wird.

Im Normalbetrieb ist das Ventil 14 so eingestellt, dass der gesamte Abgasmassenstrom über den Rekuperator 2 geführt wird. Wird nun mehr Wärme zum Beispiel zur Warmwasser- oder Dampferzeugung benötigt als die Wärmeauskopplung über die ansonsten vorhandenen Wärmetauscher liefern kann, wird das Ventil 14 so eingestellt, dass der benötigte Abgasmassenstrom über den parallel zum Rekuperator 2 geschalteten weiteren Wärmetauscher 12 geleitet wird. Im Extremfall wird der gesamte Massenstrom über den Wärmetauscher 12 gleitet. Hierbei ist zu beachten, dass der Verbrennungsluftmassenstrom jederzeit über den Rekuperator 2 geführt wird und damit die Verbrennungsluft weniger vorgewärmt wird, wenn der Abgasmassenstrom nicht vollständig über den Rekuperator 2 geführt wird. Die flexible Wärmeauskopplung hat dementsprechend zur Folge, dass bei (vollständiger) Beaufschlagung des Wärmetauschers 12 der Brennstoffmassenstrom in der Brennkammer 3 gesteigert werden muss, was durch eine mehrstufige Brennkammer 3 erreicht werden kann.

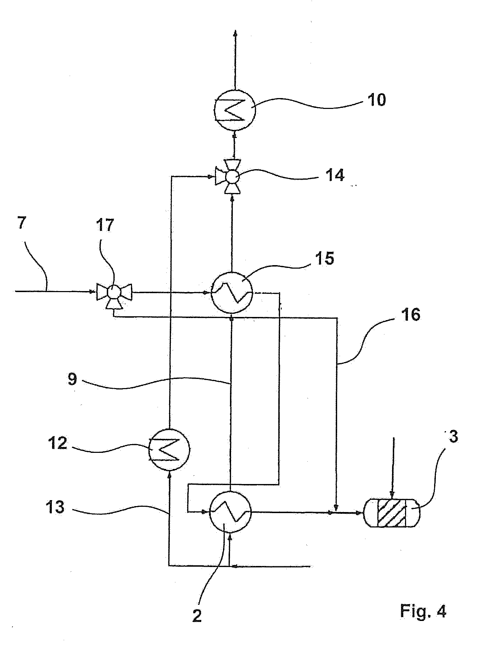

Es ist auch möglich, wie in Figur 4 dargestellt, in der Abgasleitung 9 mehrere Rekuperatoren 2, 15 in Reihe zu schalten, wobei dann der in Abgasströmungsrichtung erste Rekuperator 2 einen Hochtemperatur-Rekuperator und der dahinterliegende Rekuperator 15 einen Niedertemperatur-Rekuperator bildet. Auf diese Weise kann insbesondere beim Niedertemperatur-Rekuperator 15 auf kostenintensive Werkstoffe (high temperature alloys) verzichtet werden.

Ferner ist bei der in Figur 4 dargestellten Ausführungsform eine den Rekuperator 2 umgehende Bypassleitung 16 an die Verbrennungsluftleitung 6 angeschlossen. Dabei ist ein Ventil 17 vorgesehen, über welches der Massenstrom durch den Rekuperator 2 und/oder die Bypassleitung 16 eingestellt werden kann. Das Ventil 17 ist hier am eingangsseitigen Anschlusspunkt der Bypassleitung 16 an die Verbrennungsluftleitung 6 positioniert. Die Einstellung der Massenströme durch den Rekuperator 2 erfolgt dabei in der Weise, dass der Massenstrom, der Verbrennungsluft durch den Rekuperator 2 dem Massenstrom des den Rekuperator 2 durchströmenden Abgases entspricht und vorzugsweise die Massenströme gleich groß sind.

Eine derartige, die kalte Seite des Rekuperators umgehende Bypassleitung 16 kann auch bei allen anderen Varianten verwirklicht sein.

Wenn in der Abgasleitung mehrere Rekuperatoren 2, 15 hintereinander angeordnet sind, wie dies in der Figur 4 dargestellt ist, kann jedem dieser Rekuperatoren 2, 15 jeweils wenigstens ein hierzu parallel geschalteter Wärmetauscher 12, 18 zugeordnet sein. Die entsprechenden Wärmetauscher 12, 18 sind in Rekuperator-Bypassleitungen 13, 19 vorgesehen, welche parallel zu dem jeweils korrespondierenden Rekuperator 2, 15 bzw. einem entsprechenden Leitungsabschnitt 9a, 9b der Abgasleitung 9, in dem der Rekuperator 2, 15 platziert ist, geschaltet sind und diesen umgehen. Dabei ist jeweils ein Steuerventil 14, 17 an der Stelle des Zusammenschlusses von dem Leitungsabschnitt 9a, 9b, in welchem der jeweilige Rekuperator 2, 15 sitzt, und der Rekuperator-Bypassleitung 13, 19, in welcher der jeweils zugeordnete Wärmetauscher 12, 18 platziert ist, vorgesehen ist.

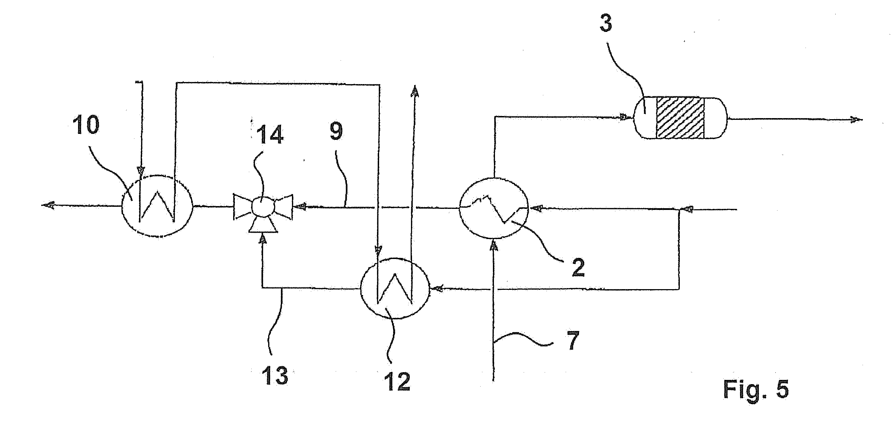

Die Wärmetauscher 10, 12 können, wie in den Figuren 2 und 3 dargestellt ist, parallel geschaltet werden. Somit besteht die Möglichkeit, die Wärmetauscher 10, 12 zu unterschiedlichen Aufgaben wie beispielsweise der Dampferzeugung oder der Warmwasserbereitung heranzuziehen. Alternativ können die Wärmetauscher 10, 12, wie in Figur 5 dargestellt ist, in Reihe geschaltet werden. In diesem Fall wird - wie auch im Falle der 100%-igen Führung der Abgase durch den Rekuperator 2 - das im Wärmetauscher 10 erwärmte Wasser durch den Wärmetauscher 12 geleitet.

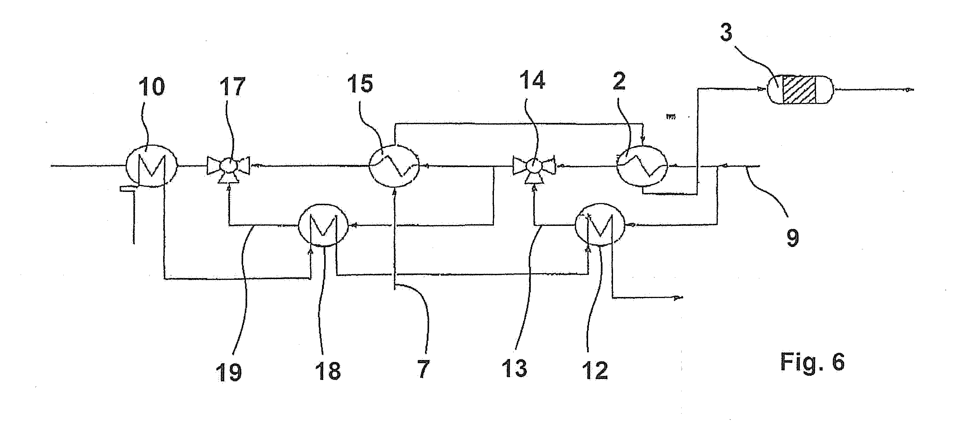

Bei der in Figur 6 dargestellten Ausführungsform sind die vorhandenen Wärmetauscher 10, 12, 18 in Reihe geschaltet, wobei das von ihnen zu erhitzende Medium nacheinander von der kalten zur warmen Seite hin durchströmt. Alternativ ist es möglich, einen oder mehrere der Wärmetauscher 10, 12, 18 parallel abzugreifen.

## Patentansprüche

1. Mikrogasturbinenanordnung mit
- einer Brennkammer (3), die einlassseitig an eine Verbrennungsluftzuführleitung (6) angeschlossen ist und in welcher Brennstoff mit zugeführter Verbrennungsluft verbrannt wird,
- einer Turbine (4), die mit der Auslassseite der Brennkammer (3) über eine Rauchgasleitung (8) verbunden ist und durch die heißen Abgase aus der Brennkammer (3) angetrieben wird,
- einem Rekuperator (2), welcher der Brennkammer (3) vorgeschaltet mit seiner kalten Seite in der Verbrennungsluftleitung (6) positioniert ist, um angesaugte Verbrennungsluft vor ihrem Eintritt in die Brennkammer (3) vorzuwärmen, wobei die warme Seite des Rekuperators (2) mit der Turbine (4) über eine Abgasseite (9) verbunden ist, um dem Rekuperator (2) heiße Abgase zuzuführen,
- einem Verdichter (1), der dem Rekuperator (2) vorgeschaltet in der Verbrennungsluftzuführleitung (6) angeordnet ist, um Verbrennungsluft anzusaugen, zu verdichten und durch die weiteren Komponenten der Mikrogasturbinenanordnung zu fördern, und
- einem Generator (5) zur Stromerzeugung,
wobei der Verdichter (1) und der Generator (5) auf einer gemeinsamen Turbinenwelle (4a) der Turbine (4) sitzen und über diese angetrieben werden, wobei die Abgasleitung (9) eine parallel zu dem Rekuperator (2) geschaltete und diese umgehende Rekuperator-Bypassleitung (13, 19) aufweist und Ventilmittel (14, 17) in der Abgasleitung (9) vorgesehen sind, um den Abgasstrom durch den Rekuperator (2, 15) einerseits und/oder die parallel dazu geschaltete Rekuperator-Bypassleitung (13, 19) andererseits zu steuern, **dadurch gekennzeichnet, dass** in der Rekuperator-Bypassleitung (13, 19) wenigstens ein Wärmetauscher (12, 18) angeordnet ist, um Wärme aus der Mikrogasturbinenanordnung auszukoppeln.

2. Mikrogasturbinenanordnung mit
- einer Brennkammer (3), die einlassseitig an eine Verbrennungsluftzuführleitung (6) angeschlossen ist und in welcher Brennstoff mit zugeführter Verbrennungsluft verbrannt wird,
- einer Turbine (4), die mit der Auslassseite der Brennkammer (3) über eine Rauchgasleitung (8) verbunden ist und durch die heißen Abgase aus der Brennkammer (3) angetrieben wird,
- einem Rekuperator (2), welcher der Brennkammer (3) vorgeschaltet mit seiner kalten Seite in der Verbrennungsluftleitung (6) positioniert ist, um angesaugte Verbrennungsluft vor ihrem Eintritt in die Brennkammer (3) vorzuwärmen, wobei die warme Seite des Rekuperators (2) mit der Turbine (4) über eine Abgasseite (9) verbunden ist, um dem Rekuperator (2) heiße Abgase zuzuführen,
- einem Verdichter (1), um Verbrennungsluft anzusaugen und durch die Mikrogasturbinenanordnung zu fördern, und
- einem Generator (5) zur Stromerzeugung,
wobei der Verdichter (1) und der Generator (5) auf einer gemeinsamen Turbinenwelle (4a) der Turbine (4) sitzen und über diese angetrieben werden, und
wobei die Abgasleitung (9) eine parallel zu dem Rekuperator (2) geschaltete und diese umgehende Rekuperator-Bypassleitung (13, 19) aufweist, und in der Abgasleitung (9) Ventilmittel (14, 17) vorgesehen sind, um den Abgasstrom durch den Rekuperator (2, 15) einerseits und/oder die parallel dazu geschaltete Rekuperatur-Bypassleitung (13, 19) andererseits zu steuern, **dadurch gekennzeichnet, dass** in der Rekuperator-Bypassleitung (13, 19) wenigstens ein Wärmetauscher (12, 18) angeordnet ist, um Wärme aus der Mikrogasturbinenanordnung auszukoppeln, und dass der Verdichter (1) der Turbine (4) nachgeschaltet in der Abgasleitung (9) vorgesehen und ausgebildet ist, um Verbrennungsluft durch die Verbrennungsluftzuführleitung (6) anzusaugen und anschließend saugend durch die Brennkammer (3) und die Turbine (4) zu transportieren.

3. Mikrogasturbinenanordnung nach Anspruch 1 oder 2, **dadurch gekennzeichnet, dass** die Ventilmittel (14, 17) zur Steuerung des Abgasstroms stromabwärts von dem Rekuperator (2, 15) und dem Wärmetauscher (12, 18) insbesondere an der Stelle, wo der Leitungsabschnitt (9a) der Abgasleitung (9), in welcher der Rekuperator (2, 15) positioniert ist, und die parallel dazu verlaufende Rekuperator-Bypassleitung (13, 19), in welcher der Wärmetauscher (12, 18) vorgesehen ist, zusammengeführt werden, vorgesehen sind.

4. Mikrogasturbinenanordnung nach einem der vorhergehenden Ansprüche, **dadurch gekennzeichnet, dass** in der Abgasleitung (9) seriell zu dem Rekuperator (2) wenigstens ein weiterer Rekuperator (15) vorgesehen ist, wobei die Rekuperatoren (2, 15) auf der kalten Seite nacheinander von der zugeführten Verbrennungsluft und auf der heißen Seite von den heißen Abgasen durchströmt werden.

5. Mikrogasturbinenanordnung nach Anspruch 4, **dadurch gekennzeichnet, dass** die Abgasleitung (9) eine parallel zu einem Rekuperator (2) und diesen umgehende erste Rekuperator-Bypassleitung (13), in der wenigstens ein Wärmetauscher (12) angeordnet ist, und eine parallel zu einem weiteren Rekuperator (15) geschaltete und diesen umgehende zweite Rekuperator-Bypassleitung (19), in welcher wenigstens ein Wärmetauscher (18) angeordnet ist, aufweist, um Wärme aus der Mikrogasturbinenanordnung auszukoppeln, wobei in der Abgasleitung (9) Ventilmittel (14, 17) vorgesehen sind, um die Abgasströme durch die Rekuperatoren (2, 15) einerseits und/oder die jeweils parallel dazu geschalteten Wärmetauscher (12, 18) andererseits durch entsprechende zu steuern.

6. Mikrogasturbinenanordnung nach Anspruch 5, **dadurch gekennzeichnet, dass** die Ventilmittel (14, 17) zur Steuerung des Abgasstroms jeweils stromabwärts von den Rekuperatoren (2, 15) und den parallel dazu geschalteten Wärmetauschern (12, 18) angeordnet sind und insbesondere jeweils an der Stelle positioniert sind, wo die Leitungsabschnitte (9a, 9b) der Abgasleitung (9), in denen die Rekuperatoren (2, 15) angeordnet sind, und die Rekuperator-Bypassleitungen (13, 19), in denen die Wärmetauscher (12, 18) angeordnet sind, zusammengeführt werden.

7. Mikrogasturbinenanordnung nach einem der vorherigen Ansprüche, **dadurch gekennzeichnet, dass** in der Verbrennungsluftleitung (6) eine den Rekuperator (2)/die Rekuperatoren (2, 15) umgehende Bypassleitung (16) vorgesehen ist, und dass Ventilmittel (17) vorgesehen sind, um den Abgasstrom durch den Rekuperator (2)/die Rekuperatoren (2, 15) und/oder die parallele Bypassleitung (16) insbesondere in der Weise zu steuern, dass die Massenströme der durch den Rekuperator (2)/die Rekuperatoren (2, 15) strömenden Verbrennungsluft und der durch den Rekuperator (2)/die Rekuperatoren (2, 15) strömenden Abgase gleich sind.

8. Mikrogasturbinenanordnung nach einem der vorhergehenden Ansprüche, **dadurch gekennzeichnet, dass** die Abgasleitung (9), insbesondere stromabwärts von dem Rekuperator (2) oder einem diesem nachgeschalteten Wärmetauscher (10), mit der Verbrennungsluftzuführleitung (6) durch eine Rückführungsleitung verbunden ist, um der Verbrennungsluft Abgase zuzumischen.

9. Mikrogasturbinenanordnung nach Anspruch 8, **dadurch gekennzeichnet, dass** in der Rückführungsleitung ein Wärmetauscher vorgesehen ist.

10. Mikrogasturbinenanordnung nach einem der vorherigen Ansprüche, **dadurch gekennzeichnet, dass** dem Rekuperator (2) vor- und/oder nachgeschaltet wenigstens ein Wärmetauscher (10) in der Abgasleitung (9) angeordnet ist, um aus der Mikrogasturbine Wärme auszukoppeln.

11. Mikrogasturbinenanordnung nach einem der vorherigen Ansprüche, **dadurch gekennzeichnet, dass** mehrere Wärmetauscher (10, 12, 18) vorgesehen sind und die kalten Seiten der Wärmetauscher (10, 12, 18) seriell miteinander verbunden sind, so dass ein zu erwärmendes Fluid nacheinander in den Wärmetauschern (10, 12, 18) erwärmt wird.

12. Mikrogasturbinenanordnung nach einem der vorherigen Ansprüche, **dadurch gekennzeichnet, dass** die Brennkammer (3) mehrstufig mit wenigstens zwei seriell hintereinander liegenden Brennkammerstufen (3a, 3b) ausgeführt ist.
